# EUROPEAN PATENT SPECIFICATION

(11) **EP 1 375 230 B1**
(45) Date of publication and mention of the grant of the patent: **21.03.2007**
(21) Application number: 03077662.9
(22) Date of filing: 30.06.1998
(51) Int. Cl.: B60K 20/04

(54) **Anti-rollover brake system**
Bremssystem zur Kippvermeidung
Systeme de freinage anti-tonneau

(30) Priority: 01.07.1997 US 51482 P; 03.09.1997 US 56302 P
(43) Date of publication of application: 02.01.2004
(62) Divisional of application: 98933042.8
(73) Proprietor: Dynamotive, L.L.C., Ann Arbor, MI 48105 (US)
(72) Inventor: Wielenga, Thomas J., Ann Arbor, MI 48105 (US)
(74) Representative: Shanks, Andrew

(56) References cited:
- WO-A-97/28017
- WO-A-99/26823
- WO-A-99/30942
- DE-A- 4 227 886
- DE-A- 4 342 732
- DE-A- 19 746 889
- GB-A- 2 316 455
- US-A- 4 480 714
- US-A- 4 998 593
- PATENT ABSTRACTS OF JAPAN vol. 012, no. 360 (M-746), 27 September 1988 (1988-09-27) -& JP 63 116918 A (KAYABA IND CO LTD), 21 May 1988 (1988-05-21)
- PATENT ABSTRACTS OF JAPAN vol. 013, no. 311 (M-851), 17 July 1989 (1989-07-17) -& JP 01 101238 A (MATSUSHITA ELECTRIC IND CO LTD), 19 April 1989 (1989-04-19)

## Description

### BACKGROUND OF THE INVENTION

### 1. Field of the Invention

The present invention relates to a brake system for preventing a friction rollover of a vehicle.

### 2. Description of the Prior Art

Vehicle rollover accidents have recently received much attention as a product safety concern from the news media and in the judicial court system. Each year, vehicle rollover accidents seriously or fatally injure many vehicle occupants. A large number of these rollovers are single vehicle accidents occurring on dry, flat roads. Frequently, these on-road rollovers are induced solely by emergency steering maneuvers. Typically, in an attempt to avoid an impending collision, a driver will steer their vehicle into a sharp emergency turn and thereby induce the rollover. This type of vehicle rollover is referred to as a friction rollover.

Friction rollovers are caused by forces of friction between the tires of the vehicle and the road. When the vehicle is turned sharply, the tires produce lateral forces. The lateral tire forces create a lateral acceleration on the center of mass of the vehicle. The lateral acceleration creates an opposing force referred to as a D'Alembert force. The D'Alembert force and the lateral tire forces act in combination to roll the vehicle outward during the turn. During some sharp turns, the combined forces are strong enough to roll the vehicle over.

Some modern vehicles, such as sport utility vehicles, light trucks, and vans, are more susceptible to friction rollovers than other vehicles. In general, these tall and narrow vehicles are top heavy, that is have a high center of gravity. As a result, sport utility vehicles, light trucks, and vans are more likely to rollover during a sharp emergency steering maneuver. Accordingly, it would be desirable to provide a simple and inexpensive vehicle brake system for preventing friction rollovers.

US Patent 4,998,593, to Karnopp et al, describes a steering and brake controlling system which senses a yaw rate or lateral acceleration rate, and controls either steering alone or steering and braking in the event that these rates are excessive. Where braking is applied, this may be biased towards the side of the vehicle away from the direction of yaw or lateral acceleration. Control of only the front pair of brakes is not suggested.

### SUMMARY OF THE INVENTION

The present invention provides a brake system for preventing a friction rollover of a vehicle in accordance with independent claim 1, and a method for preventing vehicle rollover in accordance with independent claim 8. Further features of the invention are set forth in the dependent claims.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of a vehicle steered into a sharp turn;
Figure 2 is a perspective view of the vehicle including an anti-rollover brake system in accordance with the present invention; and
Figure 3 is a fragmentary perspective view of the vehicle including a rebound bumper having an integral switch for producing a rollover signal in accordance with the present invention.

### DETAILED DESCRIPTION OF THE PREFERRED EMBODIMENT

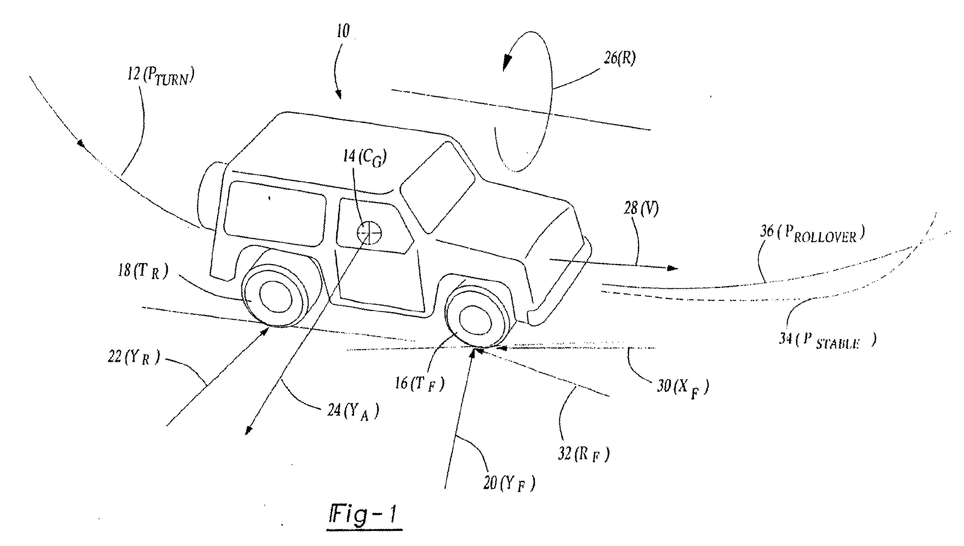

Referring to the Figures, wherein like numerals indicate like or corresponding parts throughout the several views. Figure 1 shows a perspective view of a vehicle 10 steered into a sharp or severe turn. The path of the turn is generally indicated by 12 (P_{TURN}). Typically, the sharpness of the path of the turn 12 (P_{TURN}), as shown in Figure 1, is the result of an emergency steering maneuver.

The vehicle 10 has a center of gravity 14 (C_{G}), a pair of outer tires 16 (T_{F}) and 18 (T_{R}), and a pair of inner tires (not shown). During the sharp turn, the outer tires 16 (T_{F}) and 18 (T_{R}) create a front lateral force, generally indicated by 20 (Y_{F}), and a rear lateral force, generally indicated by 22 (Y_{R}), respectively. The front lateral force 20 (Y_{F}) and the rear lateral force 22 (Y_{R}) produce an opposing D'Alembert force, generally indicated by 24 (Y_{A}), on the center of gravity 14 (C_{G}) of the vehicle 10. The front lateral force 20 (Y_{F}) and the rear lateral force 22 (Y_{R}) combine with the D'Alembert force 24 (Y_{A}) to roll the vehicle 10 outward with respect to the radius or the path of the turn 12 (P_{TURN}). The outward direction of the roll is generally indicated by 26 (R). The lateral forces on the inner tires of the vehicle 10 are negligible at the inception of a rollover and, therefore, not shown or described.

When the combination of the lateral forces 20 (Y_{F}) and 22 (Y_{R}) and the D'Alembert force 24 (Y_{A}) rises above a critical amount of force, the vehicle 10 will rollover. In this manner, a sharp or severe turn of the vehicle 10 can solely induce a friction rollover on a dry, flat road. The amount of force required to roll a specific vehicle model over is determined by many factors including the ratio of track width to center of gravity height. The amount of lateral force 20 (Y_{F}) and 22 (Y_{R}) created by each outer tire 16 (T_{F}) and 18 (T_{R}) respectively is determined in part by the slip angle and the coefficient of friction of each outer tire 16 (T_{F}) and 18 (T_{R}). The lateral forces 20 (Y_{F}) and 22 (Y_{R}) create a lateral acceleration on the center of mass 14 (C_{G}) of the vehicle 10. The lateral forces 20 (Y_{F}) and 22 (Y_{R}), the lateral acceleration, and the speed of the vehicle, generally indicated by 28 (V), combine to establish the sharpness of the turn. To prevent a friction rollover, the lateral forces 20 (Y_{F}) and 22 (Y_{R}) on the outer tires 16 (T_{F}) and 18 (T_{R}) respectively are reduced.

Braking the outer front tire 16 (T_{F}) during the sharp turn prevents a friction rollover in two ways. First, braking the outer front tire 16 (T_{F}) produces a longitudinal or brake force, generally indicated by 30 (X_{F}). During the sharp or severe turn, the outer front tire 16 (T_{F}) is heavily loaded and the inner front tire (not shown) is lightly loaded. As a result, the longitudinal force 30 (X_{F}) is much greater than the negligible longitudinal force created when the inner front tire is braked. The large longitudinal force 30 (X_{F}) causes a restoring torque to counteract the yaw or turning of the vehicle 10. As a result, the initial sharpness of the path of the turn 12 (P_{TURN}) is limited. Second, the relationship between the longitudinal force 30 (X_{F}) and the front lateral force 20 (Y_{F}), referred to as the friction circle, establishes that the outer front tire 16 (T_{F}) can produce only a limited amount of total force, generally indicated by a resultant force 32 (R_{F}). Accordingly, the creation of the longitudinal force 30 (X_{F}) by braking the outer front tire 16 (T_{F}) reduces the amount of the front lateral force 20 (Y_{F}) that the outer front tire 16 (T_{F}) can produce. Due to the reduction of the front lateral force 20 (Y_{F}), the rear lateral force 22 (Y_{R}) is greater than the front lateral force 20 (Y_{F}) thereby causing the vehicle 10 to act like a weather vane and limiting the initial sharpness of the path of the turn 12 (P_{TURN}).

If the outer front tire 16 (T_{F}) is braked during the turn, the vehicle 10 will follow an initially limited or stable path through the turn. The initially limited or stable path through the turn is generally indicated by 34 (P_{STABLE}). If the outer front tire 16 (T_{F}) is not braked during the turn, the vehicle 10 will follow a rollover path. The rollover path is generally indicated by 36 (P_{ROLLOVER}). As shown in Figure 1, initially the rollover path 36 (P_{ROLLOVER}) is sharper or "tighter" than the stable path 34 (P_{STABLE}). However, braking the outer front tire 16 (T_{F}) during the turn results in a controlled turn 34 (P_{STABLE}) which is as "tight" as safely possible and ultimately sharper than a non-braking turn 36 (P_{ROLLOVER}). Alternatively, in less complex brake systems, both front tires 16 (T_{F}) and 18 (T_{R}) may be braked during the turn to the achieve similar friction rollover prevention results.

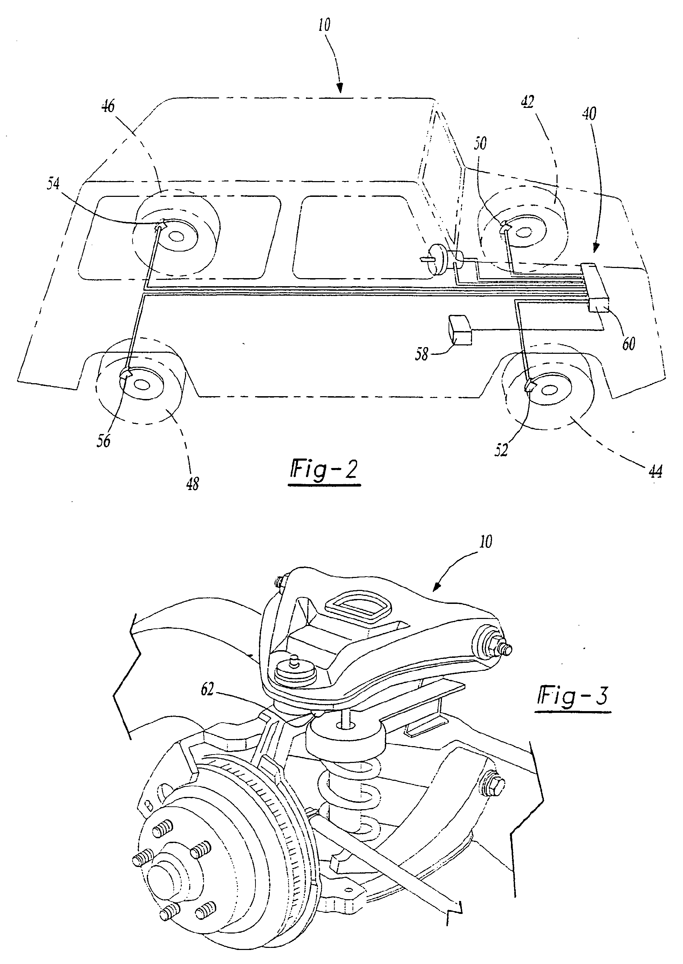

Figure 2 is a perspective view of the vehicle 10 shown in phantom lines including an anti-rollover brake system 40 in accordance with the present invention. The vehicle 10 has a pair of front wheels 42 and 44 and a pair of rear wheels 46 and 48 shown in phantom lines in Figure 2. The brake system 40 includes a set of brakes 50, 52, 54, and 56, a sensor 58, and a control 60. The brakes 50, 52, 54, and 56 apply pressure to resist the rotation of the wheels 42, 44, 46, and 48 respectively. The sensor 58 produces a rollover signal in response to a predetermined force urging the vehicle 10 to rollover. As described above, the sensor 58 is designed to produce the rollover signal when the vehicle 10 is steered into a sharp turn which, if continued, will induce a friction rollover of the vehicle 10. Preferably, the sensor 58 produces the rollover signal in response to a lateral acceleration of the center of mass of the vehicle 10 urging the vehicle 10 to rollover. The control 60 actuates the brakes 50, 52, 54, and 56 in a predetermined program in response to the rollover signal. Similar to conventional traction control brake systems, the control 60 must be capable of actuating the brakes 50, 52, 54, and 56 without the depression of a brake pedal. In conventional power assisted brake systems, engine vacuum or hydraulic power from a power steering pump is used to apply the brakes. The brake control 60 is also capable of actuating each brake 50. 52, 54, and 56 independently.

In accordance with the present invention, there are several ways to measure the predetermined force urging the vehicle 10 to rollover. In one embodiment of the present invention, the sensor 58 consists of an accelerometer for measuring a lateral acceleration of the vehicle 10. In a second embodiment of the present invention, the sensor 58 is an instrument for measuring the body roll angle of the vehicle 10. The instrument used to measure the body roll angle of the vehicle 10 may consist of an accelerometer, a gyroscope, a roll rate sensor, or other like sensor.

In a third embodiment of the present invention, the vehicle 10 includes a pair of rebound bumpers positioned on opposite sides of the vehicle 10 near a wheel 42 or 46 and 44 or 48. In this embodiment, the sensor 58 consists of a pair of switches for signaling compression of either of the rebound bumpers. A fragmentary perspective view of the vehicle 10 including one rebound bumper 62 having an integral switch (not shown) for producing the rollover signal in accordance with the present invention is shown in Figure 3. When the vehicle 10 is steered into a sharp turn which will induce a friction rollover, one of the rebound bumpers will fully compress just prior to the respective wheel 42 or 46 and 44 or 48 lifting off the road initiating the rollover. When the vehicle 10 is heavily loaded with occupants or cargo, detecting wheel lift or measuring body roll angle are extremely accurate ways to predict an impending friction rollover.

The brake control 60 is capable of actuating all four brakes 50, 52, 54, and 56 in accordance with a predetermined program. The control 60 may be programmed to actuate both front brakes 50 and 52 in response to the rollover signal. Alternatively the control 60 may be programmed to actuate one of the front brakes 50 or 52 based upon the direction of the predetermined force. Specifically, the control 60 will brake the most heavily loaded front wheel 42 or 44. If the sensor 58 is an accelerometer measuring lateral acceleration, then the control 60 will actuate the front brake 50 or 52 in the direction opposite the measured lateral acceleration. If the sensor 58 is an instrument measuring the body roll angle of the vehicle 10, then the control 60 will actuate the front brake 50 or 52 in the direction of the roll. If the sensor 58 is a rebound bumper compression switch signaling wheel lift, then the control 60 will actuate the front brake 50 or 52 opposite the signaling or lifted wheel 42, 44, 46, or 48. To increase the ability to steer the vehicle 10 out of the turn, the control 60 is also capable of releasing or deactuating any actuated brake 50, 52, 54, or 56.

The control 60 can actuate the brakes 50, 52, 54, and 56 to apply a maximum amount of brake pressure to resist the rotation of the wheels 42, 44, 46, and 48 respectively. Typically, a maximum amount of brake pressure would "lock" the braked wheel 42, 44, 46, or 48. In a preferred embodiment of the present invention, the control 60 actuates the brakes 50, 52, 54, and 56 to apply an amount of brake pressure proportional to the measured lateral acceleration of the vehicle 10. Typically, a proportional amount of brake pressure would not "lock" any wheel 42, 44, 46, or 48 during the brake actuation and, thereby, increase the ability to steer the vehicle 10 out of the turn.

In accordance with the present invention, a method for preventing the rollover of a vehicle 10 having wheels 42, 44, 46, and 48 is disclosed. As will be appreciated by one of ordinary skill in the art, the order of the steps of the method is not important to achieving the objects of the present invention. As will also be recognized, the method may be performed in software, hardware, or a combination of both.

The steps of the method may include: providing a set of brakes 50, 52, 54, and 56 for applying pressure to resist the rotation of the wheels 42, 44, 46, and 48 of the vehicle 10; providing a sensor 58 for sensing an impending rollover condition; providing a control 60 for actuating the brakes 50, 52, 54, and 56; sensing an impending rollover condition; and braking the wheels 42, 44, 46, and 48 of the vehicle 10 in response to sensing the impending rollover condition.

Prior to the step of sensing the impending rollover condition, the method may further include the step of determining a critical amount of force to roll the vehicle 10 over during a turn. Accordingly, the step of sensing the impending rollover condition may then be further defined as measuring a predetermined amount of force less than the critical amount of force and the step of braking the wheels 42, 44, 46, and 48 may be further defined as braking the wheels 42, 44, 46, and 48 in response to measuring the predetermined amount of force. For example, if it is determined that a specific vehicle model is susceptible to a friction rollover when a lateral acceleration on the vehicle's center of mass measures .8 g's, then the critical amount of force to roll the vehicle over would be .8 g's and the predetermined amount of force would be an amount less than the critical amount of force (.8 g's), such as .75 g's. Therefore, at a lateral acceleration of .75 g's, the control 58 would actuate the appropriate brakes.

In a first embodiment of the method, the step of providing the sensor 58 is further defined as providing an accelerometer for measuring the amount of lateral acceleration placed on the center of mass of the vehicle 10. Accordingly, the step of sensing the impending rollover condition may then be further defined as measuring a predetermined critical amount of lateral acceleration placed on the center of mass of the vehicle 10 and the step of braking the wheels 42, 44, 46, and 48 may be further defined as braking the wheels 42, 44, 46, and 48 in response to measuring the predetermined critical amount of lateral acceleration placed on the center of gravity of the vehicle 10.

In a second embodiment of the method, the vehicle 10 includes a pair of rebound bumpers 62 positioned near a wheel 42 or 46 and 44 or 48 on opposite sides of the vehicle 10 and the step of providing the sensor 58 is further defined as providing a switch for signaling compression of either of the rebound bumpers 62. Accordingly, the step of sensing an impending rollover condition may then be further defined as sensing compression of either of the rebound bumpers 62 and the step of braking the wheels 42, 44, 46, and 48 may be further defined as braking the wheels 42, 44, 46, and 48 in response to sensing compression of either of the rebound bumpers 62.

In a third embodiment of the method, the step of providing the sensor 58 is further defined as providing an accelerometer, a gyroscope, or a roll rate sensor to measure the roll angle of the vehicle 10. Accordingly, the step of sensing the impending rollover condition may then be further defined as measuring a predetermined critical roll angle of the vehicle 10 and the step of braking the vehicle 10 may be further defined as braking the vehicle 10 in response to measuring the predetermined critical roll angle.

In alternative embodiments of the method, the step of braking the wheels 42, 44, 46 and 48 may be further defined as applying a maximum amount of pressure to the wheels 42, 44, 46 and 48 or applying an amount of pressure to the wheels 42, 44, 46 and 48 proportional to the lateral acceleration placed on the center of gravity of the vehicle 10, rebound bumper compression, or roll angle.

When the vehicle 10 includes a pair of front wheels 42 and 44 and a pair of front brakes 50 and 52, the step of braking the wheels 42, 44, 46, and 48 may be further defined as braking the front wheels 42 and 44. Alternatively, prior to the step of braking the wheels 42, 44, 46 and 48, the method may further include the step of determining which front wheel 42 or 44 is loaded with the largest amount of lateral force. Accordingly, the step of braking the wheels 42, 44, 46, and 48 may then be further defined as braking the front wheel 42 or 44 loaded with the largest amount of lateral force.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims the invention may be practiced otherwise than specifically described.

## Claims

1. An anti-rollover brake system (40) for a vehicle having front wheels (42, 44), the system comprising:
a set of front brakes (50, 52) for applying pressure to resist the rotation of the front wheels (42, 44);
a sensor (58) for establishing at least one of a lateral acceleration or a body roll angle of the vehicle, for producing a rollover signal in response to a force urging the vehicle to rollover; and
a control (60) for actuating said front set of brakes (50, 52) in a predetermined program in response to said rollover signal, when said rollover signal reaches a predetermined limit indicative of impending rollover, the control being adapted to actuate one of said front brakes independently of the other of said front brakes to avoid rollover.

2. A brake system (40) as set forth in claim 1 wherein said force is proportional to the lateral acceleration of the vehicle.

3. A brake system (40) as set forth in claim 1 wherein said control (60) actuates said front-set of brakes (50, 52) to apply a maximum amount of pressure.

4. A brake system (40) as set forth in claim 2 wherein said control (60) actuates said front set of brakes (50, 52) to apply an amount of pressure proportional to said lateral acceleration.

5. A brake system (40) as set forth in claim 1 wherein said sensor (58) comprises an accelerometer for measuring lateral acceleration of the vehicle.

6. A brake system (40) as set forth in claim 1 wherein said sensor (58) comprises an instrument for measuring the roll angle of the vehicle.

7. A brake system (40) as set forth in claim 6 wherein said instrument comprises at least one of an accelerometer, a gyroscope, a roll rate sensor, and sensors measuring the distances between the vehicle and the wheels.

8. A method for preventing a rollover of a vehicle (10) having at least a pair of front wheels (42, 44), the steps of the method comprising:
providing a set of front brakes (50, 52) for applying pressure to resist the rotation of each of the front wheels (42, 44);
providing a sensor (58) for sensing an impending rollover condition by establishing at least one of a lateral acceleration or a body roll angle of the vehicle;
providing a control (60) for actuating said set of front brakes (50, 52), the control adapted to actuate one of said front brakes independently of the other of said front brakes;
sensing an impending rollover condition;
actuating said set of front brakes (50, 52), and
braking said front wheels (42, 44) of the vehicle (10) to avoid rollover in response to sensing the impending rollover condition when said rollover signal reaches a predetermined limit indicative of impending rollover.

9. A method as set forth in claim 8 including the step of determining a critical amount of force to roll the vehicle over during a turn prior to the step of sensing the impending rollover condition.

10. A method as set forth in claim 9 wherein the step of sensing the impending rollover condition is further defined as establishing a predetermined amount of force less than the critical amount of force.

11. A method as set forth in claim 10 wherein the step of braking said front wheels (42, 44) is further defined as braking said front wheels (42, 44) in response to measuring the predetermined amount of force.

12. A method as set forth in claim 8 wherein the step of providing the sensor is further defined as providing an accelerometer for measuring said lateral acceleration.

13. A method as set forth in claim 12 wherein the step of sensing the impending rollover condition is further defined as measuring a predetermined critical amount of lateral acceleration placed on the centre of mass of the vehicle (10).

14. A method as set forth in claim 13 wherein the step of braking said front wheels (42, 44) is further defined as braking said front wheels (42, 44) in response to measuring the predetermined critical amount of lateral acceleration placed on the centre of gravity of the vehicle (10).

15. A method as set forth in claim 8 wherein the step of providing the sensor is further defined as providing one of an accelerometer, a gyroscope, a roll rate sensor, and sensors measuring the distance between the vehicle (10) and the wheels (42, 44, 46, 48) to measure the roll angle of the vehicle (10).

16. A method as set forth in claim 15 wherein the step of sensing the impending rollover condition is further defined as measuring a predetermined critical roll angle of the vehicle (10).

17. A method as set forth in claim 16 wherein the step of braking said front wheels (42, 44) of the vehicle (10) is further defined as braking said front wheels (42, 44) of the vehicle (10) in response to measuring the predetermined critical roll angle.

18. A method as set forth in claim 8 wherein the step of braking said front wheels (42, 44) is further defined as applying a maximum amount of pressure to said set of front brakes (50, 52).

19. A method as set forth in claim 12 wherein the step of braking said front wheels (42, 44) is further defined as applying an amount of pressure to said set of front brakes (52, 54) proportional to the lateral acceleration placed on the centre of gravity of the vehicle (10).

## Patentansprüche

1. Bremssystem zur Überschlagvermeidung (40) für ein Fahrzeug mit Vorderrädern (42, 44), wobei das System aufweist:
einen Satz von Vorderradbremsen (50, 52) für das Anwenden eines Druckes, um der Drehung der Vorderräder (42, 44) zu widerstehen;
einen Sensor (58) für das Ermitteln von mindestens einem von einer Querbeschleunigung oder einem Querneigungswinkel der Karosserie des Fahrzeuges, um ein Überschlagsignal als Reaktion auf eine Kraft zu erzeugen, die das Fahrzeug zum Überschlag treibt; und
eine Steuerung (60) für das Betätigen des vorderen Satzes von Bremsen (50, 52) in einem vorgegebenen Programm als Reaktion auf das Überschlagsignal, wenn das Überschlagsignal eine vorgegebene Grenze erreicht, die auf einen nahe bevorstehenden Überschlag hinweist, wobei die Steuerung angepasst ist, um eine der Vorderradbremsen unabhängig von der anderen der Vorderradbremsen zu betätigen, um einen Überschlag zu vermeiden.

2. Bremssystem (40) nach Anspruch 1, bei dem die Kraft der Querbeschleunigung des Fahrzeuges proportional ist.

3. Bremssystem (40) nach Anspruch 1, bei dem die Steuerung (60) den Vordersatz der Bremsen (50, 52) betätigt, um ein maximales Druckmaß anzuwenden.

4. Bremssystem (40) nach Anspruch 2, bei dem die Steuerung (60) den Vordersatz der Bremsen (50, 52) betätigt, um ein Druckmaß anzuwenden, das der Querbeschleunigung proportional ist.

5. Bremssystem (40) nach Anspruch 1, bei dem der Sensor (58) einen Beschleunigungsmesser für das Messen der Querbeschleunigung des Fahrzeuges aufweist:

6. Bremssystem (40) nach Anspruch 1, bei dem der Sensor (58) ein Instrument für das Messen des Querneigungswinkels des Fahrzeuges ist.

7. Bremssystem (40) nach Anspruch 6, bei dem das Instrument mindestens eines von einem Beschleunigungsmesser, einem Kreiselgerät, einem Querneigungsgeschwindigkeitssensor und Sensoren aufweist, die die Abstände zwischen dem Fahrzeug und den Rädern messen.

8. Verfahren für das Verhindern eines Überschlages eines Fahrzeuges (10) mit mindestens einem Paar Vorderrädern (42, 44), wobei das Verfahren die folgenden Schritte aufweist:
Bereitstellen eines Satzes von Vorderradbremsen (50,52) für das Anwenden eines Druckes, um der Drehung eines jeden der Vorräder (42, 44) zu widerstehen;
Bereitstellen eines Sensors (58) für das Ermitteln eines nahe bevorstehenden Überschlagzustandes durch Ermitteln von mindestens einem von einer Querbeschleunigung oder einem Querneigungswinkel der Karosserie des Fahrzeuges;
Bereitstellen einer Steuerung (60) für das Betätigen des Satzes der Vorderradbremsen (50, 52), wobei die Steuerung angepasst ist, um eine der Vorderradbremsen unabhängig von der anderen der Vorderradbremsen zu betätigen;
Ermitteln eines nahe bevorstehenden Überschlagzustandes;
Betätigen des Satzes der Vorderradbremsen (50, 52); und
Abbremsen der Vorderräder (42, 44) des Fahrzeuges (10), um einen Überschlag als Reaktion auf das Ermitteln des nahe bevorstehenden Überschlagzustandes zu vermeiden, wenn das Überschlagssignal eine vorgegebene Grenze erreicht, die auf einen nahe bevorstehenden Überschlag hinweist.

9. Verfahren nach Anspruch 8, das den Schritt des Bestimmens eines kritischen Wertes der Kraft, um das Fahrzeug während einer Kurve zum Überschlagen zu bringen, vor dem Schritt des Ermittelns des nahe bevorstehenden Überschlagszustandes umfasst.

10. Verfahren nach Anspruch 9, bei dem der Schritt des Ermittelns des nahe bevorstehenden Überschlagszustandes außerdem als das Ermitteln eines vorgegebenen Wertes der Kraft kleiner als der kritische Wert der Kraft definiert wird.

11. Verfahren nach Anspruch 10, bei dem der Schritt des Abbremsens der Vorderräder (42, 44) außerdem als das Abbremsen der Vorderräder (42, 44) als Reaktion auf das Messen des vorgebebenen Wertes der Kraft definiert wird.

12. Verfahren nach Anspruch 8, bei dem der Schritt des Bereitstellens des Sensors außerdem als das Bereitstellen eines Beschleunigungsmessers für das Messen der Querbeschleunigung definiert wird.

13. Verfahren nach Anspruch 12, bei dem der Schritt des Ermittelns des nahe bevorstehenden Überschlagszustandes außerdem als das Messen eines vorgegebenen kritischen Wertes der Querbeschleunigung definiert wird, die am Massenmittelpunkt des Fahrzeuges (10) angewandt wird.

14. Verfahren nach Anspruch 13, bei dem der Schritt des Abbremsens der Vorderräder (42, 44) außerdem als das Abbremsen der Vorderräder (42, 44) als Reaktion auf das Messen des vorgegebenen kritischen Wertes der Querbeschleunigung definiert wird, die am Schwerpunkt des Fahrzeuges (10) angewandt wird.

15. Verfahren nach Anspruch 8, bei dem der Schritt des Bereitstellens des Sensors außerdem als das Bereitstellen eines von einem Beschleunigungsmesser, einem Kreiselgerät, einem Querneigungsgeschwindigkeitssensor und Sensoren definiert wird, die den Abstand zwischen dem Fahrzeug (10) und den Rädern (42, 44, 46, 48) messen, um den Querneigungswinkel des Fahrzeuges (10) zu messen.

16. Verfahren nach Anspruch 15, bei dem der Schritt des Ermittelns des nahe bevorstehenden Überschlagszustandes außerdem als das Messen eines vorgegebenen kritischen Quemeigungswinkels des Fahrzeuges (10) definiert wird.

17. Verfahren nach Anspruch 16, bei dem der Schritt des Abbremsens der Vorderräder (42, 44) des Fahrzeuges (10) außerdem als das Abbremsen der Vorderräder (42, 44) des Fahrzeuges (10) als Reaktion auf das Messen des vorgegebenen kritischen Quemeigungswinkels definiert wird.

18. Verfahren nach Anspruch 8, bei dem der Schritt des Abbremsens der Vorräder (42, 44) außerdem als das Anwenden eines maximalen Druckmaßes auf den Satz der Vorradbremsen (50, 52) definiert wird.

19. Verfahren nach Anspruch 12, bei dem der Schritt des Abbremsens der Vorderräder (42, 44) außerdem als das Anwenden eines Druckmaßes auf den Satz der Vorderradbremsen (52, 54) proportional zu der Querbeschleunigung definiert wird, die auf den Schwerpunkt des Fahrzeuges (10) angewandt wird.

## Revendications

1. Système de frein anti-tonneau (40) pour un véhicule comportant des roues avant (42, 44), le système comprenant:
un jeu de freins avant (50, 52) pour appliquer une pression pour résister à la rotation des roues avant (42, 44);
un capteur (58) pour établir au moins un élément pris parmi une accélération latérale et un angle de roulis de corps du véhicule, pour produire un signal de tonneau en réponse à une force qui pousse le véhicule à réaliser un tonneau; et
une commande (60) pour actionner ledit jeu de freins avant (50, 52) selon un programme prédéterminé en réponse audit signal de tonneau lorsque ledit signal de tonneau atteint une limite prédéterminée qui est indicative d'un tonneau imminent, la commande étant adaptée pour actionner l'un desdits freins avant indépendamment de l'autre desdits freins avant pour éviter un tonneau.

2. Système de frein (40) selon la revendication 1, dans lequel ladite force est proportionnelle à l'accélération latérale du véhicule.

3. Système de frein (40) selon la revendication 1, dans lequel ladite commande (60) actionne ledit jeu de freins avant (50, 52) pour appliquer une valeur de pression maximum.

4. Système de frein (40) selon la revendication 2, dans lequel ladite commande (60) actionne ledit jeu de freins avant (50, 52) pour appliquer une valeur de pression proportionnelle à ladite accélération latérale.

5. Système de frein (40) selon la revendication 1, dans lequel ledit capteur (58) comprend un accéléromètre pour mesurer une accélération latérale du véhicule.

6. Système de frein (40) selon la revendication 1, dans lequel ledit capteur (58) comprend un instrument pour mesurer l'angle de roulis du véhicule.

7. Système de frein (40) selon la revendication 6, dans lequel ledit instrument comprend au moins un élément pris parmi un accéléromètre, un gyroscope, un capteur de taux de roulis et des capteurs qui mesurent les distances entre le véhicule et les roues.

8. Procédé pour empêcher un tonneau d'un véhicule (10) comportant au moins une paire de roues avant (42, 44), les étapes du procédé comprenant:
la fourniture d'un jeu de freins avant (50, 52) pour appliquer une pression pour résister à la rotation de chacune des roues avant (42, 44);
la fourniture d'un capteur (58) pour détecter une condition de tonneau imminent en établissant au moins un élément pris parmi une accélération latérale et un angle de roulis de corps du véhicule;
la fourniture d'une commande (60) pour actionner ledit jeu de freins avant (50, 52), la commande étant adaptée pour actionner l'un desdits freins avant indépendamment de l'autre desdits freins avant;
la détection d'une condition de tonneau imminent;
l'actionnement dudit jeu de freins avant (50, 52); et
le freinage desdites roues avant (42, 44) du véhicule (10) pour éviter un tonneau en réponse à la détection de la condition de tonneau imminent lorsque ledit signal de tonneau atteint une limite prédéterminée qui est indicative d'un tonneau imminent.

9. Procédé selon la revendication 8, incluant l'étape de détermination d'une valeur critique de force pour faire réaliser un tonneau au véhicule pendant un virage avant l'étape de détection de la condition de tonneau imminent.

10. Procédé selon la revendication 9, dans lequel l'étape de détection de la condition de tonneau imminent est en outre définie en tant qu'établissement d'une valeur prédéterminée de force inférieure à la valeur critique de force.

11. Procédé selon la revendication 10, dans lequel l'étape de freinage desdites roues avant (42, 44) est en outre définie en tant que freinage desdites roues avant (42, 44) en réponse à la mesure de la valeur prédéterminée de force.

12. Procédé selon la revendication 8, dans lequel l'étape de fourniture du capteur est en outre définie en tant que fourniture d'un accéléromètre pour mesurer ladite accélération latérale.

13. Procédé selon la revendication 12, dans lequel l'étape de détection de la condition de tonneau imminent est en outre définie en tant que mesure d'une valeur critique prédéterminée d'accélération latérale placée sur le centre de masse du véhicule (10).

14. Procédé selon la revendication 13, dans lequel l'étape de freinage desdites roues avant (42, 44) est en outre définie en tant que freinage desdites roues avant (42, 44) en réponse à la mesure de la valeur critique prédéterminée d'accélération latérale placée sur le centre de gravité du véhicule (10).

15. Procédé selon la revendication 8, dans lequel l'étape de Fourniture du capteur est en outre définie en tant que fourniture d'un élément pris parmi un accéléromètre, un gyroscope, un capteur de taux de roulis et des capteurs qui mesurent la distance entre le véhicule (10) et les roues (42, 44, 46, 48) afin de mesurer l'angle de roulis du véhicule (10).

16. Procédé selon la revendication 15, dans lequel l'étape de détection de la condition de tonneau imminent est en outre définie en tant que mesure d'un angle de roulis critique prédéterminé du véhicule (10).

17. Procédé selon la revendication 16, dans lequel l'étape de freinage desdites roues avant (42, 44) du véhicule (10) est en outre définie en tant que freinage desdites roues avant (42, 44) du véhicule (10) en réponse à la mesure de l'angle de roulis critique prédéterminé.

18. Procédé selon la revendication 8, dans lequel l'étape de freinage desdites roues avant (42, 44) est en outre définie en tant qu'application d'une valeur maximum de pression sur ledit jeu de freins avant (50, 52).

19. Procédé selon la revendication 12, dans lequel l'étape de freinage desdites roues avant (42, 44) est en outre définie en tant qu'application d'une valeur de pression sur ledit jeu de freins avant (52, 54) proportionnelle à l'accélération latérale placée sur le centre de gravité du véhicule (10).
